(19) Europäisches Patentamt
European Patent Office
Office européen des brevets

(11) Veröffentlichungsnummer: **0 422 438 A2**

# (12) EUROPÄISCHE PATENTANMELDUNG

(21) Anmeldenummer: **90118355.8**

(22) Anmeldetag: **25.09.90**

(51) Int. Cl.[5]: **C08L 69/00**, C08K 13/02, C08K 13/04, //(C08K13/02,3:30, 5:00,5:524,5:50,5:15), (C08K13/04,7:20,5:00,5:524, 5:50,5:15)

(30) Priorität: **07.10.89 DE 3933545**

(43) Veröffentlichungstag der Anmeldung: **17.04.91 Patentblatt 91/16**

(84) Benannte Vertragsstaaten: **BE DE ES FR GB IT NL**

(71) Anmelder: **BAYER AG**

**W-5090 Leverkusen 1 Bayerwerk(DE)**

(72) Erfinder: **Westeppe, Uwe**
**Vogelskamp 72**
**W-4020 Mettmann(DE)**
Erfinder: **Grigo, Ulrich, Dr.**
**Michelsheide 9**
**W-4152 Kempen(DE)**
Erfinder: **Freitag, Dieter, Dr.**
**Hasenheide 9**
**W-4150 Krefeld(DE)**
Erfinder: **Nouvertné, Werner, Dr.**
**Burgstrasse 17b**
**W-4150 Krefeld(DE)**
Erfinder: **Fengler, Gerd, Dr.**
**Deutschordenweg 12**
**W-4150 Krefeld-Traar(DE)**
Erfinder: **Rathmann, Dietrich, Dr.**
**Alte Landstrasse 119**
**W-5090 Leverkusen(DE)**
Erfinder: **Sandquist, Axel, Dr.**
**Am Driesch 11**
**W-4019 Monheim(DE)**

## (54) Polycarbonate aus Dihydroxydiphenylcycloalkanen mit Additiven.

(57) Gegenstand der vorliegenden Erfindung sind Polycarbonate auf Basis von Dihydroxydiphenylcycloalkanen der Formel (I)

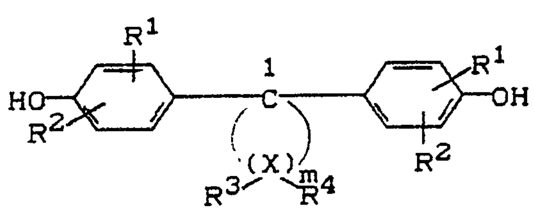
(I),

worin
$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl, und $C_7$-$C_{12}$-Aralkyl,
m eine ganze Zahl von 4 bis 7,
$R^3$ und $R^4$, für jedes X individuell wählbar, unabhänging voneinander Wasserstoff oder eines $C_1$-$C_6$-Alkyl und
X Kohlenstoff bedeuten,
mit der Maßgabe, daß an mindestens einem Atom X, $R^3$ und $R^4$ gleichzeitig Alkyl ist,
mit einem Gehalt an üblichen Additiven, ausgewählt aus Entformungsmitteln, Stabilisatoren, Antistatika, Trü-

EP 0 422 438 A2

bungsmitteln und Treibmitteln.

## POLYCARBONATE AUS DIHYDROXYDIPHENYLCYCLOALKANEN MIT ADDITIVEN

Gegenstand der Erfindung der deutschen Patentanmeldung P 3 832 396.6 (Le A 26 344) sind Dihydroxydiphenylcycloalkane der Formel (I)

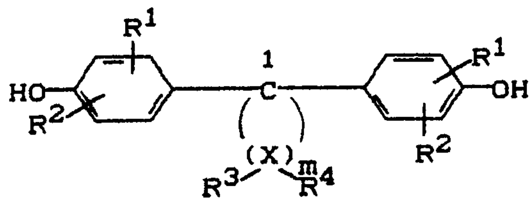

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$, für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyldisubstitution in $\beta$-Stellung zu C-1 bevorzugt. Insbesondere sind Gegenstand der Erfindung Dihydroxydiphenylcycloalkane mit 5 und 6 Ring-C-Atomen im cycloaliphatischen Rest (m = 4 oder 5 in Formel (I) wie beispielsweise die Diphenole der Formeln

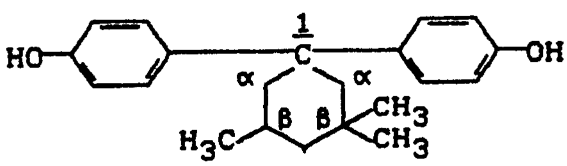

(II)

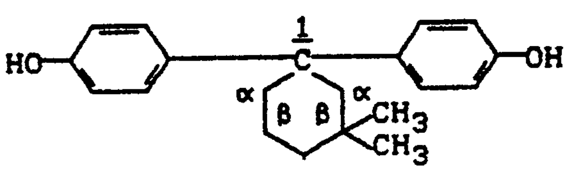

(III) und

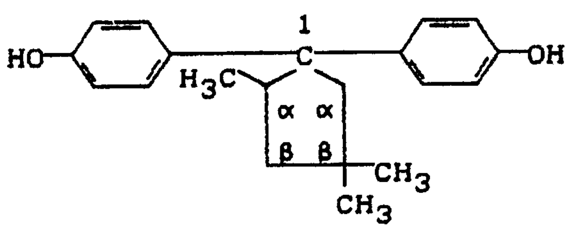

(IV),

wobei das 1,1-Bis-(4-hydroxyphenyl)-3.3.5-trimethylcyclohexan (Formel II) besonders bevorzugt ist.

Die Dihydroxydiphenylcycloalkane der Formel (I) können in an sich bekannter Weise durch Kondensation von Phenolen der Formel (V)

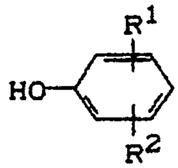

(V)

und Ketonen der Formel (VI)

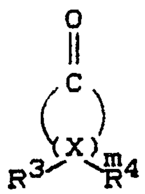

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Diphenylphenol und o,- oder p-Benzylphenole.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488, 1490 und 1491, US-PS 2 692 289, Allen et al., J. Chem. Soc., (1954), 2186, 2191 und J. Org. Chem. Vol 38, No. 26, (1973), Seiten 4431 ff, J. Am. Chem. Soc. 87 , (1965), Seite 1353 ff, insbesondere Seite 1355. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:
3,3-Dimethylcyclopentanon, 2,2-Dimethylcyclohexanon, 3,3-Dimethylcyclohexanon, 4,4-Dimethylcyclohexanon, 3-Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trlmethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propyl cyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

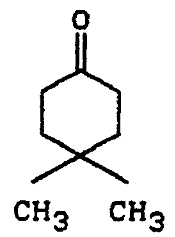
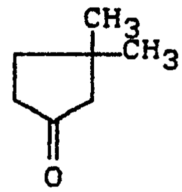

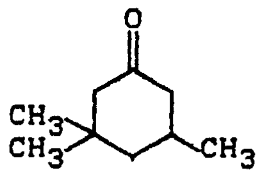
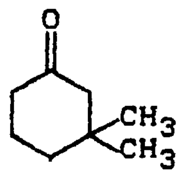
und
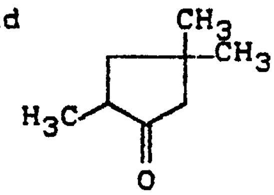

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30 °C bis 300 °C, vorzugsweise von -15 °C bis 150 °C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Gegenstand der Erfindung der deutschen Patentanmeldung P 38 32 396.6 ist somit außerdem ein Verfahren zur Herstellung der Dihydroxydiphenylcycloalkane der Formel (I)

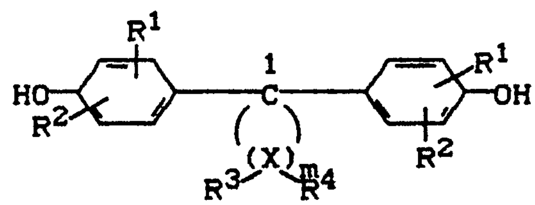
(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5, sind,

$R^3$ und $R^4$, für jedes X individuell wählbar, unabhängig voneinander Wasserstoff oder $C_1$-$C_6$-Alkyl

und

X Kohlenstoff ist

mit der Maßgabe, daß an mindestens einem Atom X $R^3$ und $R^4$ gleichzeitig Alkyl bedeuten,

das dadurch gekennzeichnet ist, daß man Phenole der Formel (V)

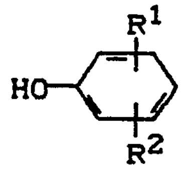

(V)

worin
$R^1$ und $R^2$ die für Formel (I) angegebene Bedeutung haben,
mit Ketonen der Formel (VI)

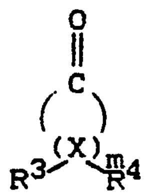

(VI)

worin
X, m, $R^3$ und $R^4$ die für Formel (I) angegebene Bedeutung haben,
im Molverhältnis (V) : (VI) zwischen 2:1 und 10:1, vorzugsweise zwischen 2,5:1 und 6:1 bei Temperaturen zwischen -30 °C und 300 °C, vorzugsweise zwischen -15 °C und 150 °C und bei Drücken von 1 bis 20 bar, vorzugsweise von 1 bis 10 bar in Anwesenheit saurer Katalysatoen und gegebenenfalls in Anwesenheit von Co-Katalysatoen und/oder Lösungsmitteln und/oder wasserentziehenden Mitteln umsetzt.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in $\alpha$-Stellung zu dem di-phenylsubstituierten C-Atom (C-1) sind bevorzugt nicht dialkylsubstituiert, dagegen ist die Disubstitution mit Alkyl in $\beta$-Stellung in C-1 bevorzugt.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert.

Beispiel A

Herstellung des Diphenols (II)

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30 °C mit trockenem HCl-Gas gesättigt. Zu dieser Lösung werden innerhalb von 3 Stunden eine Losung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 h bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
Ausbeute: 370 g
Schmelzpunkt: 205 bis 207 °C

Die Diphenole der Formel (I) sind insbesondere geeignet zur Herstellung von hochmolekularen, thermoplastischen Polycarbonaten, die sich durch hohe Wärmeformbeständigkeit in Kombination mit einem guten sonstigen Eigenschaftsbild auszeichnen.

Gegenstand der Erfindung der deutschen Patentanmeldung P 3 832 396.6 ist somit auch die Verwendung der Diphenole der Formel (I) zur Herstellung von hochmolekularen thermoplastischen, aromatischen

Polycarbonaten.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl )-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von zu verwendenden Diphenolen der Formel (I) zu den gegebenenfalls mitzuverwendenden anderen Diphenolen, beispielsweise denen der Formel (VII), soll zwischen 100 Mol-% (I) zu 0 Mol-% anderem Diphenol und 2 Mol-%. (I) zu 98 Mol-% anderem Diphenol, vorzugsweise zwischen 100 Mol% (I) zu 0 Mol% anderem Diphenol und 5 Mol% (I) zu 95 Mol%. anderem Diphenol und insbesondere zwischen 100 Mol%(I) zu 0 Mol% anderem Diphenol und 10 Mol%. (I) zu 90 Mol%. anderem Diphenol und ganz besonders zwischen 100 Mol%. (I) zu 0 Mol% anderem Diphenol und 20 Mol% (I) zu 80 Mol% anderem Diphenol liegen.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Gegenstand der Erfindung der deutschen Patentanmeldung P 3 832 396.6 ist somit auch ein Verfahren zur Hestellung von hochmolekularen thermoplastischen, aromatischen Polycarbonaten aus Diphenolen, gegebenenfalls Kettenabbrechern und gegebenenfalls Verzweigern nach den bekannten Methoden der Polycarbonatherstellung, vorzugsweise nach dem Zweiphasengrenzflächenverfahren, das dadurch gekennzeichnet ist, daß man als Diphenole solche der Formel (I) in Mengen von 100 Mol-% bis 2 Mol-%, vorzugsweise in Mengen von 100 Mol-% bis 5 Mol-% und insbesondere in Mengen von 100 Mol-% bis 10 Mol-%, und ganz besonders 100 Mol-% bis 20 Mol-%, bezogen jeweils auf die Gesamtmolmenge an eingesetzten Diphenolen, verwendet.

Als Verzweiger dienen, falls benutzt, in bekannter Weise geringe Mengen, vorzugsweise Mengen zwischen 0,05 und 2,0 Mol% (bezogen auf eingesetzte Diphenole), an drei oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan
und
1,4-Bis-((4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur Regelung des Molekulargewichts dienen in bekannter Weise monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (VIII) geeignet

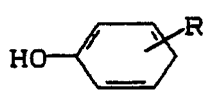

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate der deutschen Patentanmeldung P 38 32 396.6 können vorzugsweise nach dem Phasengrenzflächenverfahren (vgl. H. Schnell, "Chemistry and Physics of Polycarbonates", Polymer Reviews, Vol. IX, Seite 33 ff ., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 °C und 40 °C.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (I) sowie den anderen Diphenolen (VII) können auch deren Mono-und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktureinheiten von (I) und gegebenenfalls von den anderen Di-phenolen wie beispielsweise von (VII); ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Isolierung der Polycarbonate erfolgt in bekannter Weise.

Die hochmolekularen, thermoplastischen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden. Auch hier werden die erfindungsgemäßen Polycarbonate in bekannter Weise isoliert.

Die nach dem Verfahren der deutschen Patentanmeldung P 38 32 396.6 erhältlichen Polycarbonate haben bevorzugt Molekulargewichte $\overline{M}$ w (Gewichtsmittel, ermittelt durch Gelchromatographie nach vorheriger Eichung) von mindestens 10 000, besonders bevorzugt von 10 000 bis 200 000 und insbesondere von 20 000 bis 80 000. Sie können linear oder verzweigt sein, sie sind Homopolycarbonate oder Copolycarbonate auf Basis der Diphenole der Formel (I).

Gegenstand der Erfindung der deutschen Patentanmeldung P 38 32 396.6 sind somit auch hochmolekulare thermoplastische, aromatische Polycarbonate mit $\overline{M}$ w (Gewichtsmittelmolekulargewichten) von mindestens 10 000, vorzugsweise von 10 000 bis 200 000 und insbesondere von 20 000 bis 80 000, erhältlich nach dem erfindungsgemäßen Verfahren aus Diphenolen der Formel (I), die linear oder verzweigt sind.

Gegenstand der Erfindung der deutschen Patentanmeldung P 38 32 396.6 sind somit auch hochmolekulare, thermoplastische, aromatische Polycarbonate mit $\overline{M}$ w (Gewichtsmittelmolekulargewichten) von mindestens 10 000, vorzusweise von 10 000 bis 200 000 und insbesondere von 20 000 bis 80 000, die bifunktionelle Carbonatstruktureinheiten der Formel (Ia)

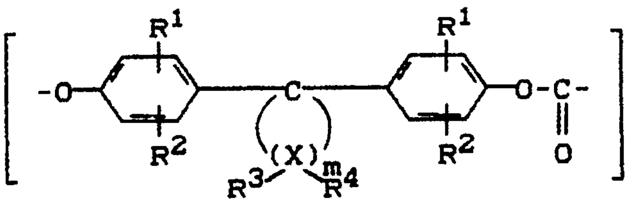

(Ia)

worin

X, $R^1$, $R^2$, $R^3$, $R^4$ und m die für die Formel (I) genannte Bedeutung haben,

in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstuktureinheiten, beispielsweise solchen der Formel (VIIa)

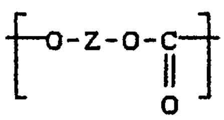

(VIIa),

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat.

Polycarbonate auf Basis von cycloaliphatischen Bisphenolen sind grundsätzlich bekannt und z.B. in EP-0 164 476, DE-OS 33 45 945, DE-OS 20 63 052, FR 14 27 998, WP 80 00 348, BE 785 189 beschrieben. Sie haben häufig relativ hohe Einfriertemperaturen, aber andere, wichtige physikalische Eigenschaften wie UV- und Wärmealterungsstabilität sind unzureichend.

Es hat sich nun überraschenderweise gezeigt, daß wie bereits erwähnt durch den Einbau der erfindungsgemäßen Diphenole der Formel (I) neue Polycarbonate mit hoher Wärmeformbeständigkeit erhalten werden, die auch sonst ein gutes Eigenschaftsbild haben. Dies gilt insbesondere für die Polycarbonate auf Basis der Diphenole (I), in denen "m" 4 oder 5 ist, und ganz besonders für die Polycarbonate auf Basis der Diphenole (Ib)

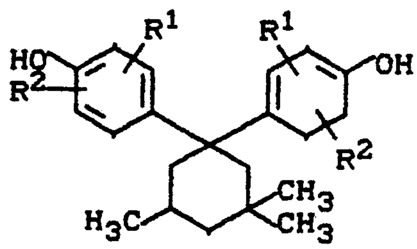

(Ib),

worin

$R^1$ und $R^2$ unabhängig voneinander die für Formel (I) genannte Bedeutung haben und besonders bevorzugt Wasserstoff sind.

Somit sind Gegenstand der Erfindung der deutschen Patentanmeldung P 38 32 396.6 vorzugsweise Polycarbonate, in denen die Struktureinheiten der Formel (Ia) eingeschränkt sind auf m = 4 oder 5 und ganz besonders solche der Formel (Ic) sind

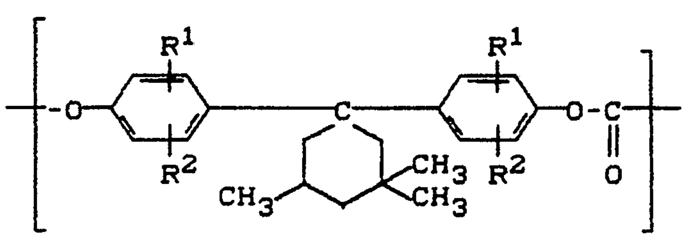

(Ic)

worin

$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

Die Isolierung der nach dem Verfahren der deutschen Patentanmeldung P 38 32 396.6 erhältlichen Polycarbonate geschieht in bekannter Weise, indem man die bei Phasengrenzflächenverfahren erhaltene organische Phase abtrennt, neutral und elektrolytfrei wäscht und dann beispielsweise über einen Eindampfextruder als Granulat isoliert.

Den Polycarbonaten der deutschen Patentanmeldung P 38 32 396.6 können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Im einzelnen können beispielsweise Ruß, Kieselgur, Kaolin, Tone, $CaF_2$, $CaCO_3$, Aluminiumoxide, Glasfasern und anorganische Pigmente sowohl als Füllstoffe als auch als Nucleierungsmittel zugesetzt werden, sowie als Entformungsmittel beispielsweise Glycerinstearate, Pentaerythrittetrastearat und Trimethylolpropentristearat.

Die Polycarbonate der deutschen Patentanmeldung P 38 32 396.6 können zu Formkörpern verarbeitet werden, indem man beispielsweise die in bekannter Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die Polycarbonate der deutschen Patentanmeldung P 38 32 396.6 sind als Formkörper überall dort einsetzbar, wo die bislang bekannten Polycarbonate eingesetzt wurden, also im Elektrosektor sowie im Bausektor für Abdeckungen und Verglasungen, und zwar dann, wenn erhöhte Wärmeformbeständigkeit bei gleichzeitig guter Verarbeitbarkeit, also wenn komplizierte Bauteile hoher Wärmeformbeständigkeit verlangt werden.

In den nachfolgenden Beispielen B.1 bis B.5 wird die relative Viskosität gemessen an 0,5 Gew.-%igen Lösung des Polycarbonats in $CH_2Cl_2$.

Die Einfriertemperatur oder Glastemperatur wird gemessen durch Differential Scanning Calorimetry (DSC).

## Beispiel B.1

30,94 g (0,1 Mol) des Diphenols (II), 33,6 g (0,6 Mol) KOH und 560 g Wasser werden in einer Inertgas-Atmosphäre unter Rühren gelöst. Dann fügt man eine Lösung von 0,188 g (2 Mol-%) Phenol in 560 g Methylenchlorid zu. In die gut gerührte Lösung wurden bei pH 13 bis 14 und 21 bis 25 °C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233 °C bestimmt (DSC).

## Beispiel B.2

68,4 g (0,3 Mol) Bisphenol A (2,2-Bis-(4-hydroxyphenyl)propan, 217,0 g (0,7 Mol) Diphenol (II), 336,6 g (6 Mol) KOH und 2700 g Wasser werden in einer Inertgas-Atmosphäre unter Rühren gelöst. Dann fügt man eine Lösung von 1,88 g (0,02 Mol) Phenol in 2500 g Methylenchlorid zu. In die gut gerührte Lösung wurden bei pH 13 bis 14 und 21 bis 25 °C 198 g (2 Mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212 °C bestimmt (DSC).

## Beispiel B.3

Wie in Beispiel B.2 wurde eine Mischung aus 114 g (0,5 Mol) Bisphenol A und 155 g (0,5 Mol) Diphenol (II) zum Polycarbonat umgesetzt.

Das Polycarbonat zeigte eine relative Lösungsviskosität von 1,386.

Die Glastemperatur des Polymer wurde zu 195 °C bestimmt (DSC).

## Beispiel B.4

Wie in Beispiel B.2 wurde eine Mischung aus 159,6 g (0,7 Mol) Bisphenol A und 93 g (0,3 Mol) Diphenol (II) zum Polycarbonat umgesetzt.

Das Polycarbonat zeigte eine relative Lösungsviskosität von 1,437.

Die Glastemperatur des Polymers wurde zu 180 ° C bestimmt (DSC).

Beispiel B.5

31,0 g (0,1 Mol) Diphenol (II), 24,0 g (0,6 Mol) NaOH und 270 g Wasser werden in einer Inertgas-Atmosphäre unter Rühren gelöst. Dann fübt man eine Lösung von 0,309 g (1,5 Mol-%) 4-(1,3-Tetramethylbutyl)-phenol in 250 g Methylenchlorid zu. In die gut gerührte Lösung wurden bei pH 13 bis 14 und 21 bis 25 ° C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die oganische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234 ° C bestimmt (DSC).

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

In der deutschen Patentanmeldung P 3 837 090.5 (Le A 26 402) sind außerdem Folien aus den vorstehend genannten Polycarbonaten beschrieben. Darüber hinaus sind in dieser Anmeldung auch Verbundfolien dieser Polycarbonat-Folien mit Folien aus anderen Kunststoffen beschrieben.

Es hat sich nun gezeigt, daß für die Polycarbonate auf Basis der Diphenole der Formel (I) als Entformungsmittel außer den bereits genannten Glycerinstearaten, Pentaerythrittetrastearat und Trimethylolpropantristearaten auch andere Entformungsmittel eingesetzt werden können, wie sie beispielsweise in den deutschen Patentschriften 2 064 095 (Le A 13 461), 2 220 185 (Le A 14 329), 2 507 748 (Le A 16 284), 2 701 725 (Le A 17 784), 2 620 257 (Le A 17 163) und 2 708 467 (Le A 17 847) aufgeführt sind. Geeignete Entformungsmittel dieser Art sind beispielsweise die Loxiole® G31 und G 47 (Handelsprodukte der Fa. Henkel, Düsseldorf), Estergemische aus Stearylalkohol mit unverzweigten, aliphatischen, gesättigten $C_{20}$-$C_{24}$-Fettsäuren, Estergemische der Glyceride der Laurinsäure, Myristinsäure und Palmitinsäure (1:1:1).

Geeignete Entformungsmittel sind außer den bereits genannten der Cerotinsäureester des Cerylalkohols, der Cerotinsäureester des Myricylalkohols, und der Palmitinsäureester des Myricylalkohols, Pentaerythrittristearat und Trimethylolpropanpalmitinsäure-stearinsäuremischester.

Geeignete Entformungsmittel sind beispielsweise auch Polycaprolactone gemäß der DE-OS 2 622 412 (Mo-1528-I) und oxidierte Polyethylene gemäß der DE-OS 3 704 666 (Le A 24 915).

Gegenstand der vorliegenden Erfindung sind somit die Polycarbonate der deutschen Patentanmeldung P 3 832 396.6 (Le A 26 344) mit einem Gehalt an Entformungsmittel in Mengen von 0,01 Gew.-% bis 3 Gew.-%, vorzugsweise von 0,05 Gew.-% bis 2,5 Gew.-% und insbesondere von 0,1 Gew.-% bis 2 Gew.-%, wobei vorzugsweise als Entformungsmittel Fettsäureester von Monoalkoholen, von Trialkoholen, von Tetraalkoholen oder von Bisphenolen, Polycaprolactone und/oder oxidierte Polyethylene eingesetzt werden können.

Es hat sich außerdem gezeigt, daß die hochwärmeformbeständigen Polycarbonate der deutschen Patentanmeldung P 3 832 396.6 (Le A 26 344) im Zuge der bei hohen Temperaturen erforderlichen Verarbeitung einer gewissen Thermostabilisierung mit den für Polycarbonate üblichen Thermostabilisatoren bedürfen. Hierbei können je nach Bedarf verschiedene Phosphitester eingesetzt werden, also Ester der phosphorigen Säure, wie diese beispielsweise in der DE-AS 1 128 653 (Ue 1926) sowie in den deutschen Patentschriften 2 140 207 (Le A 13 917), 2 255 639 (Le A 14 709), 2 510 463 (Le A 16 231) und in dem US-PS 4 456 717 (Le A 21 688) in den verschiedensten Ausführungen beschrieben sind, gegebenenfalls in Kombination mit Oxetanverbindungen beispielsweise gemäß DE-PS 2 510 463 und gemäß US-Patent 4 456 717.

Beispiele für derartige Phosphitester sind Tris-(3-ethyloxethanyl-3-methyl)-phosphit, Triphenylphosphit, Tris-(tetrahydrofuranyl-2)-methylphosphit, Weston® 618, Handelsprodukt der Fa. General Electric und Irgafos® 168, Handelsprodukt der Fa. Ciba Geigy, Tridecylphosphit und Tris-(p-tert.-butylphenyl)-phosphit.

Beispiele für Oxetanverbindungen sind 3-Hydroxymethyl-3-methyloxeton, 3-Hydroxymethyl-3-amyloxetan, Bis-[(3-ethyloxetanyl-3)-methyl]-carbonat, 3-Phenoxymethyl-3-ethyloxetan und [3-Ethyloxetanyl-3]-methylstearat.

Beispiele für Kombinationen von Phosphitestern mit Oxetanverbindungen sind beispielsweise Mischungen aus Triphenylphosphit mit 3-Hydroxymethyl-3-methyloxetan oder mit 3-Hydroxymethyl-3-amyloxetan.

Gegenstand der vorliegenden Erfindung sind somit auch die Polycarbonate der deutschen Patentanmeldung P 3 832 396.6 (Le A 26 344) mit einem Gehalt an neutralen Estern der phosphorigen Säure in Mengen von 0,001 Gew.-% bis 3 Gew.-%, vorzugsweise von 0,01 Gew.-% bis 3 Gew.-% und insbesondere von 0,05 Gew.-% bis 2 Gew.-%, und gegebenenfalls mit einem Gehalt an Oxetanverbindungen in Mengen von 0,05 Gew.-% bis 5 Gew.-%, vorzugsweise von 0,1 Gew.-% bis 3 Gew.-% und insbesondere von 0,2 Gew.-% bis 2 Gew.-%, bezogen jeweils auf Gewicht Polycarbonat.

Weitere geeignete Thermostabilisatoren sind auch Phosphine, wie sie in EP-PS 0 143 906 (Le A 22 588) und EP-PS 0 043 998 (Le A 20 430) beschrieben sind.

Geeignete Phosphine sind beispielsweise solche der Formel (IX)

$(R_6)_2$-P-$R_5$ (IX),

wobei

$R_6$ ein unsubstituiertes oder substituiertes $C_6$-$C_{14}$-Aryl ist und

$R^5$ R oder ein unsubstituiertes oder substituiertes $C_1$-$C_{18}$-Alkyl ist.

Diese Phosphine können wiederum in Kombination mit Oxetanverbindungen, beispielsweise der Formel (X)

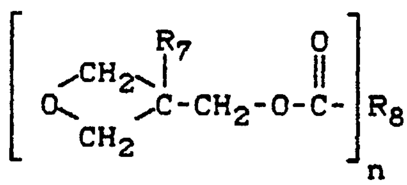

(X)

worin

$R_7$ $C_1$-$C_{16}$-Alkyl und

$R_8$ entweder ein n-bindiges $C_2$-$C_8$-Alkan, das noch durch OH-Gruppen substituiert sein kann, wobei n eine Zahl von 1-6 ist oder eine 2-bindiges Cycloalkan, wobei n = 2 ist, sind,

oder beispielsweise der Formel (XI)

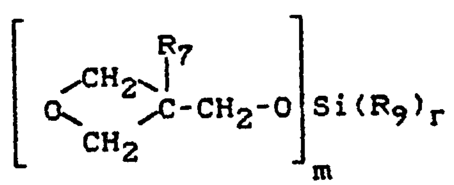

(XI)

worin

$R^7$ $C_1$-$C_{16}$-Alkyl und

$R^9$ $C_1$-$C_4$-Alkyl, das gegebenenfalls durch Cyan, Carboxy oder Acetoxy substituiert sein kann, Allyl, $C_6$-$C_{14}$-Aryl, das gegebenenfalls alkylsubstituiert ist, $C_7$-$C_{14}$-Aralkyl oder $C_1$-$C_4$-Alkoxy, das gegebenenfalls durch $C_1$-$C_4$-Alkoxy oder Allyloxy substituiert sein kann, m eine ganze Zahl von 1 bis 4 und r eine ganze Zahl von 0 bis 3, wobei m + r immer gleich 4 ist,

kombiniert werden,

wobei das Mischungsverhältnis von Phosphin der Formel (IX) und Oxetanverbindung der Formel (X) oder (XI) zwischen 3 und 10 Oxetangruppenäquivalenten der oxetangruppenhaltigen Verbindung per Atomäquivalent Phosphor des Phosphans liegt.

Bevorzugtes Phosphin ist Triphenylphosphin, gegebenenfalls in Kombination mit Oxetanverbindungen.

Gegenstand der vorliegenden Erfindung sind somit auch die Polycarbonate der deutschen Patentanmeldung P 3 832 396.6 (Le A 26 344) mit einem Gehalt an Phosphinen in Mengen von 0,001 Gew.-% bis 2 Gew.-%, vorzugsweise von 0,01 Gew.-% bis 1 Gew.-% und gegebenenfalls mit einem Gehalt an Oxetanverbindungen in Mengen von 0,05 Gew.-% bis 5 Gew-%, vorzugsweise von 0,1 Gew.-% bis 3 Gew.-%, bezogen jeweils auf Gewicht Polycarbonat.

Geeignete Stabilisatoren gegen Feuchtigkeit sind außerdem epoxidgruppenhaltige Mischpolymere, wie sie beispielsweise im deutschen Patent DOS 2 019 325 oder in dem US-PS 3 761 440 beschrieben sind.

Zur Herstellung der Mischpolymerisate können als Reaktionspartner zu den epoxidgruppenhaltigen Vinylmonomeren z.B. folgende Monomere verwendet werden: Ethylen, Propylen, Isobutylen, Vinylchlorid,

Vinylidenchlorid, Acryl-und Methacrylsäure-ester, -amide und -nitrile, Vinylacetat, -propionat und -benzoat, Vinylmethyl-ethyl- und -isobutylether, Styrol, α-Methylstyrol, Vinyltoluol, p-Ethylstyrol, 2,4-Dimethylstyrol, o-Chlorstyrol und 2,5-Dichlorstyrol.

Geeignete epoxidgruppenhaltige Vinylmonomere sind z.B. Glycidylester von ungesättigten Carbonsäuren (Glycidylmethacrylat), Glycidether von ungesättigten Alkoholen (Allylglycidether) und von Alkenylphenolen (Isopropenylphenylglycidether), Vinyl- und Allylester von Epoxycarbonsäuren (Vinylester der epoxydierten Ölsäure). Im allgemeinen können alle Verbindungen, die sowohl eine polymerisierbare ungesättigte Gruppe als auch reaktionsfähige Epoxidgruppen im Molekül enthalten, zur Herstellung der Mischpolymerisate verwendet werden. Besonders geeignet sind Mischpolymerisate aus Glycidylmethacrylat, Methylmethacrylat und Styrol.

Die Mischpolymerisate, die man nach bekannten Verfahren, z.B. durch eine radikalische Polymerisation in Chlorbenzol bei 80° C in 50 %iger Lösung, erhält, deren Molekulargewichte, die keinen nennenswerten Einfluß auf die Eigenschaften der pigmentierten Polycarbonate haben, zwischen etwa 20.000 und etwa 100.000, bevorzugt zwischen etwa 40.000 und etwa 80.000, liegen können und die zweckmäßig etwa 5 bis 500, bevorzugt etwa 20 bis etwa 200 Epoxidgruppen pro Makromolekül enthalten, werden zweckmäßig in Mengen von etwa 5 bis etwa 100 Gew.-%, vorzugsweise in Mengen von etwa 10 bis etwa 30 Gew.-%, bezogen auf den Pigmentgehalt, verwendet.

Daraus folgt, daß derartige Epoxide insbesondere bei Gegenwart von Pigmenten zu den zu stabilisierenden Polycarbonaten gegeben werden

Ein Beispiel für ein derartiges epoxidhaltiges Polymer ist ein Mischpolymerisat aus Glycidylacrylat, Methylmethacrylat und Styrol in Gewichtsverhältnissen von 20:20:60.

Andere Epoxidstabilisatoren niedermolekularer Art sind 3,4-Epoxycyclohexylmethyl-3,4-epoxycyclohexancarboxylat und Bis-(3,4-Epoxycyclohexyl)-adipat.

Gegenstand der vorliegenden Erfindung sind somit auch die Polycarbonate der deutschen Patentanmeldung P 3 832 396.6 (Le A 26 344) mit einem Gehalt an epoxidgruppenhaltigen Stabilisatoren, insbesondere von epoxidgruppenhaltigen Mischpolymeren, in Mengen von 0,01 Gew.-% bis 5 Gew.-%, vorzugsweise von 0,1 Gew.-% bis 3 Gew.-%, gegebenenfalls in Kombination mit Pigmenten in den üblichen Mengen, bezogen jeweils auf Gewicht Polycarbonat.

Es hat sich außerdem gezeigt, daß als Antistatika insbesondere Alkali- und Erdalkalisalze alkylsubstituierte aromatische Sulfonsäuren, wie beispielsweise Lithiumdodecylbenzolsulfonat sowie Alkali- oder Erdalkalisalze von Sulfobernsteinsäureestern, wie beispielsweise Natrium-bis-(2-ethylhexyl)-sulfosuccinat, geeignet sind (siehe DOS 2 931 172 (Le A 19 826) und DOS 3 736 749 (Le A 25 548)).

Gegenstand der vorliegenden Erfindung sind somit auch die Polycarbonate der deutschen Patentanmeldung P 3 832 396.6 (Le A 26 344) mit einem Gehalt an Antistatika in Mengen von 0,01 Gew.-% bis 5 Gew.-%, vorzugsweise 0,01 Gew.-% bis 2 Gew.-%, bezogen auf Gewicht Polycarbonat.

Die genannten Antistatika sind insbesondere für die antistatische Ausrüstung der Folien der Polycarbonate der deutschen Patentanmeldung P 3 837 090.5 (Le A 26 402) geeignet.

Es hat sich außerdem gezeigt, daß als Füllstoffe außer Glasfasern auch Glaskugeln oder $BaSO_4$ den Polycarbonaten der deutschen Patentanmeldung P 3 832 396.6 (Le A 26 344) zugesetzt werden können, insbesondere wenn man daraus opake Platten oder andere Formkörper herstellen will. Der Zusatz von Glaskugeln ist in der DE-PS 2 721 885 (Le A 17 879) und der Zusatz von $BaSO_4$ beispielsweise in DE-OS 2 251 708 beschrieben.

Gegenstand der vorliegenden Erfindung sind somit auch die Polycarbonate der deutschen Patentanmeldung P 3 832 396.6 (Le A 26 344), die Glaskugeln oder $BaSO_4$ in Mengen von 0,1 Gew.-% bis 50 Gew.-%, vorzugsweise von 1 Gew.-% bis 25 Gew.-%, bezogen auf Gewicht Polycarbonat, enthalten.

Es hat sich weiter gezeigt, daß die Polycarbonate der deutschen Patentanmeldung P 3 832 396.6 (Le A 26 344) mit Treibmitteln vermischt werden können, um daraus Schaumstoffe herstellen zu können.

Geeignete Treibmittel sind beispielsweise Gemische aus 1,4-Butandiol-bis- (kohlensäureester-benzoesäure-anhydrid) und Siliziumdioxid gemäß DE-PS 2 441 418 (Le A 15 931) oder Gemische aus Verbindungen der Formel (XII)

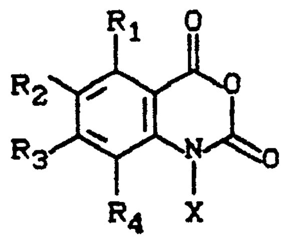

(XII)

worin $R_1$ bis $R_4$ gleich oder verschieden Wasserstoff, geradkettige oder verzweigte Alkylreste mit 1 bis 4 Kohlenstoffatomen, Hydroxy- oder Nitrogruppen oder Halogenatome sowie $R_2$ darüber hinaus noch einen Molekülrest folgender Formel

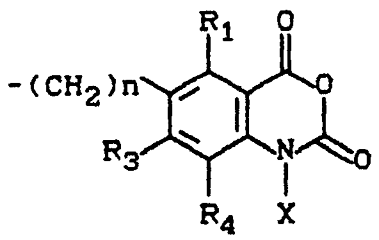

,

wobei n von 0-4 variieren kann, die Reste $R_1$, $R_3$ und $R_4$ die oben aufgeführte Bedeutung haben und X Wasserstoff oder geradkettige oder verzweigte Alkylreste mit 1-4 Kohlenstoffatomen bedeuten, in Kombination mit Verbindungen der allgemeinen Formel (XIII)

$A_pEF_q$ (XIII)

worin A ein Element der ersten Hauptgruppe des periodischen Systems bedeutet, E ein Element der dritten, vierten oder fünften Haupt- oder Nebengruppe des periodischen Systems, F für Fluor steht, p von 1-3 und q von 4-6 je nach Wertigkeit der Elemente E variieren können, gegebenenfalls in Kombination mit anderen bekannten Treibmitteln, gemäß DE-OS 3 602 014 (Le A 24 235).

Geeignete Treibmittel sind außerdem Tetrazole wie 5-Phenyltetrazol gemäß US-Patent 4 263 409.

Geeignete Treibmittel sind schließlich auch in 4-Stellung acylierte 2-Phenyl-1-oxo-3,4-diazolone-5 der Formel (XIV)

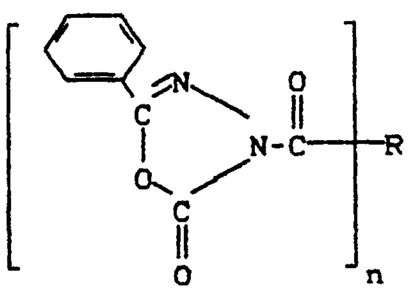

(XIV)

worin

n = 1 und R $C_1$-$C_{18}$-Alkoxy, $C_6$-$C_{12}$-Cycloalkoxy, $C_6$-$C_{18}$-Aryl, $C_6$-$C_{12}$-Aryloxy, $C_7$-$C_{18}$-Aralkyl, $C_7$-$C_{18}$-Aralkoxy, $C_7$-$C_{18}$-Alkaryl und $C_7$-$C_{18}$-Alkaryloxy bedeuten, oder worin

n = 2 und R $C_6$-$C_{18}$-Arylen, $C_6$-$C_{18}$-Arylen-dioxy, Isopropyliden-bis-(phenylenoxy) und $C_1$-$C_5$-Alkylen bedeuten oder

worin

n = 2 und H eine Einfachbindung ist, und die außerdem eine Zersetzungstemperatur in Substanz von mindestens 265° C haben müssen, zusammen mit Cyanursäure, gemäß EP-OS 0 154 805 (Le A 22 869).

Gegenstand der vorliegenden Erfindung sind somit auch die Polycarbonate der deutschen Patentanmeldung P 3 832 396.6 (Le A 26 344) mit einem Gehalt an Treibmitteln oder an Treibmittelgemischen in Mengen von 0,01 Gew.-% bis 10 Gew.-%, vorzugsweise von 0,02 Gew.-% bis 5 Gew.-%, bezogen auf Gewicht Polycarbonat.

Geeignete Treibmittel bzw. -gemische sind beispielsweise: 5-Phenyltetrazol, Isatosäureanhydrid in

Kombination mit Kaliumtetrafluoroborat, Di-(2-phenyl-1,3,4-oxadiazolon-(5))-terephthalamid, gegebenenfalls in Kombination mit Cyanursäure sowie Phenyldihydrooxadiazinon.

Die genannten Additive können einzeln oder zu mehreren gemeinsam, vorzugsweise in Extrudern oder Knetern in die Polycarbonate eingearbeitet werden. In vielen Fällen können die Additive den genannten Polycarbonaten schon während der Herstellung oder auch schon den Ausgangsstoffen zugesetzt werden. Die Additive können auch zu Lösungen der genannten Polycarbonate zugegeben und die Lösungsmittel dann abgedampft werden.

Gegenstand der vorliegenden Erfindung sind somit auch die Polycarbonate der deutschen Patentanmeldung P 3 832 396.6 (Le A 26 344) mit einem Gehalt an Additiven ausgewählt aus.

1. Entformungsmitteln in Mengen von 0,01 Gew.-% bis 3 Gew.-%,

Le A 27 209

2. neutralen Estern der phosphorigen Säure in Mengen von 0,001 Gew.-% bis 3 Gew.-% und gegebenenfalls mit einem Gehalt an Oxetanverbindunen in Mengen von 0,05 Gew.-% bis 5 Gew.-%,

3. Phosphinen in Mengen von 0,001 Gew.-% bis 2 Gew.-% und gegebenenfalls mit einem Gehalt an Oxetanverbindungen in Mengen von 0,05 Gew.-% bis 5 Gew.-%,

4. epoxidgruppenhaltigen Stabilisatoren in Mengen von 0,01 Gew.-% bis 5 Gew.-% und gegebenenfalls in Kombination mit Pigmenten,

5. Antistatika in Mengen von 0,01 Gew.-% bis 5 Gew.-%,

6. Glaskugeln oder $BaSO_4$ in Mengen von 0,1 Gew.-% bis Gew.-% und

7. Treibmitteln oder Treibmittelgemischen in Mengen von 0,01 Gew.-% bis 10 Gew.-%, wobei sich die Gewichtsangaben der Additive 1 bis 7 jeweils auf Gewicht Polycarbonat beziehen.

Die Polycarbonate der deutschen Patentanmeldung P 3 832 396.6 (Le A 26 344) bzw. Polycarbonatfolien der deutschen Patentanmeldung P 3 837 090.5 (Le A 26 402), die erfindungsgemäß die vorstehend genannten Additive wie Entformungsmittel, Stabilisatoren, Antistatika, Trübungsmittel und Treibmittel enthalten, können überall dort eingesetzt werden, wo entsprechende bekannte Polycarbonate bereits Verwendung finden, wo jedoch erhöhte Wärmeformbeständigkeit, verbunden mit guter Verarbeitbarkeit und Stabilität gegenüber Witterungseinflüssen ($0_2$, Feuchtigkeit und Temperatur), gefordert wird.

## Beispiele

Für die aufgeführten Beispiele wurde ein Copolycarbonat auf Basis von 1,1-Bis-(4-hydroxyphenyl)-3,3,5-trimethylcyclohexan und 2,2-(4-hydroxyphenyl)-propan in den Molverhältnissen 35:65 mit einer relativen Lösungsviskosität von 1,295 (gemessen in Methylenchlorid bei 25 °C und einer Konzentration von 0,5 g/100 ml) eingesetzt.

### Beispiel 1

Die Normfarbwerte Y wurden nach einer Heißluftalterung bei 150 °C nach ASTM-D 1925 bestimmt. Das Copolycarbonat enthielt als Thermostabilisator 0,1 Gew.-% Tris-(3-ethyloxetanyl-3-methyl)-phosphit.

| h | Normfarbwert Y |
|---|---|
| 0 | 87,7 |
| 200 | 87,9 |
| 600 | 86,4 |
| 1.000 | 84,7 |

### Beispiel 2

Die Normfarbwerte Y wurden nach ASTM-D 1925 und die Trübung nach DIN 5036 an einer 150 °C gealterten Probe des oben genannten Copolycarbonats, das 0,05 Gew.-% Triphenylphosphin als Thermostabilisator enthielt, bestimmt.

| h | Normfarbwert Y | Trübung |
|---|---|---|
| 0 | 87,5 | 1,6 |
| 100 | 87,7 | 1,8 |

## Ansprüche

Hochmolekulare, thermoplastische, aromatische Polycarbonate mit $\overline{M}$ w (Gewichtsmittelmolekulargewichten) von mindestens 10.000, vorzusweise von 10.000 bis 200.000 und insbesondere von 20.000 bis 80.000, die bifunktionelle Carbonatstruktureinheiten der Formel (Ia)

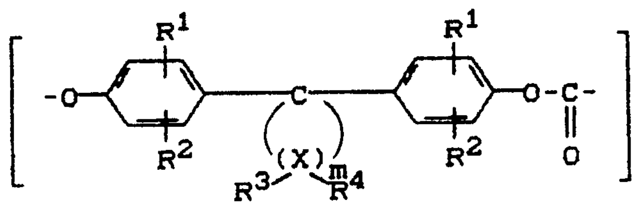
(Ia)

worin
$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,
m eine ganze Zahl von 4 bis 7,
$R^3$ und $R^4$ für jedes X individuell wählbar, unabhängig voneinander Wasserstoff, $C_1$-$C_6$-Alkyl und
X Kohlenstoff bedeuten
mit der Maßgabe, daß an mindestens einem Atom X $R^3$ und $R^4$ gleichzeitig Alkyl bedeuten,
mit einem Gehalt an Additiven ausgewählt aus
1. Entformungsmitteln in Mengen von 0,01 Gew.-% bis 3 Gew.-%,
2. neutralen Estern der phosphorigen Säure in Mengen von 0,001 Gew.-% bis 3 Gew.-% und gegebenenfalls mit einem Gehalt an Oxetanverbindunen in Mengen von 0,05 Gew.-% bis 5 Gew.-%,
3. Phosphinen in Mengen von 0,001 Gew.-% bis 2 Gew.-% und gegebenenfalls mit einem Gehalt an Oxetanverbindungen in Mengen von 0,05 Gew.-% bis 5 Gew.-%,
4. epoxidgruppenhaltigen Stabilisatoren in Mengen von 0,01 Gew.-% bis 5 Gew.-% und gegebenenfalls in Kombination mit Pigmenten,
5. Antistatika in Mengen von 0,01 Gew.-% bis 5 Gew.-%,
6. Glaskugeln oder $BaSO_4$ in Mengen von 0,1 Gew.-% bis 50 Gew.-% und
7. Treibmitteln oder Treibmittelgemischen in Mengen von 0,01 Gew.-% bis 10 Gew.-%,
wobei sich die Gewichtsangaben der Additive 1 bis 7 jeweils auf Gewicht Polycarbonat beziehen.